# EUROPEAN PATENT APPLICATION

(11) **EP 1 278 165 A1**
(43) Date of publication of application: **22.01.2003**
(21) Application number: 01917746.8
(22) Date of filing: 30.03.2001
(51) Int. Cl.: G07C 3/00, G07F 17/00, G06F 17/60

(54) **SYSTEM FOR DETERMINING RENTAL OF CONSTRUCTION MACHINE**

(30) Priority: 31.03.2000 JP 2000099165; 31.03.2000 JP 2000099166
(71) Applicant: HITACHI CONSTRUCTION MACHINERY CO., LTD., Bunkyo-ku, Tokyo 112-0004 (JP)
(72) Inventor: ADACHI, Hiroyuki, Okijyukumachi, Tsuchiurashi, Ibaraki 300 (JP); HIRATA, Toichi, Sakaechou, Ushikushi, Ibaraki 300-1233 (JP); SUGIYAMA, Genroku, Mihomura, Inashiki-gun, Ibaraki 300-0402 (JP); WATANABE, Hiroshi, Taguuchou, Ushikushi, Ibaraki 300-1236 (JP); SHIBATA, Koichi, Tsuchiurashi, Ibaraki 300-0011 (JP); KOMATSU, Hideki, Tonemachi, Kitasouma-gun, Ibaraki 300-16 (JP)
(74) Representative: Prins, Adrianus Willem
(86) International application number: JP0102814
(87) International publication number: WO01073695

(57) **Abstract**

A construction machine rental fee setting system comprises a receiver, provided at a location remote from a construction machine, that receives information relating to the usage conditions and/or the usage environment of the construction machine transmitted from the construction machine, and a rental fee setting device that sets a construction machine rental fee based on the information received at the receiver.

## Description

### TECHNICAL FIELD

The present invention relates to a rental fee setting system for setting rental fees for construction machines.

### BACKGROUND ART

In rental procedures for construction machines (for example hydraulic excavators), it is common practice not to charge a rental fee for the day that contact is received from a user that a machine is not in use due to bad weather. With this type of system, the user must contact the rental company each day that a machine is idle.

There are hydraulic excavators capable of a crane operation with a hook attached to a bucket. These types of hydraulic excavator are provided with an overload protector (a Moment Limiter: hereafter referred to as ML) as a crane safety device. It is common practice with rental companies to bill clients by adding a fee for use of the ML to the normal rental fee in the event that the user has utilized the ML. Specifically, oil becomes degraded significantly when using the ML and it makes a change of oil necessary earlier than usual, so that a larger rental fee shall be charged than for when the ML is not used. There are also situations where a breaker is used instead of the bucket, and an additional usage charge will also be added in such cases, for similar reasons. Generally, the users themselves have been trusted to notify the rental company of whether or not an ML or breaker has been used, with the result that it has not always been possible to charge an appropriate rental fee.

Also, the load imposed on a construction machine varies depending on usage conditions (for example, workload, traveling load, working time etc.), and so it is desired to reflect these usage conditions and the usage environment in the rental charge. However, it is currently difficult for a rental company to accurately ascertain the usage conditions and usage environment of a construction machine, and there is no system available that enables setting of a rental fee taking these factors in to consideration.

### DISCLOSURE OF THE INVENTION

The object of the present invention is to provide a construction machine rental fee setting system that is capable of ascertaining usage conditions and usage environment of a construction machine without notification from a user, to charge an appropriate rental fee.

In order to achieve this object, a construction machine rental fee setting system of the present invention comprises a receiver, provided at a location that is remote from the construction machine, for receiving information relating to the usage conditions and/or the usage environment of the construction machine transmitted from the construction machine, and a rental fee setting device for setting the construction machine rental fee based on the information received at the receiver.

According to the present invention, it is possible to set an appropriate construction machine rental fee because the rental fee is set based on the information relating to the usage conditions and the usage environment of the construction machine in question.

Information relating to the usage conditions of the construction machine includes information relating to workload, information relating to traveling load, information relating to working time, information relating to swiveling time, information relating to traveling time of the construction machine, and information relating to whether or not any special functions other than normal functions have been used.

Information relating to the usage environment of the construction machine includes information relating to the site the construction machine is being used at, and information relating to weather.

In a construction machine rental fee setting system of another aspect of the invention, a detector for detecting the location of a construction machine, a measurement device for measuring operating conditions of the construction machine, and a transmitter for transmitting information relating to location and operating conditions, are provided in the construction machine, while a receiving station comprises a receiver for receiving information transmitted from the construction machine, a weather information acquisition unit for obtaining weather information for the locality indicated by the received location information, and a data processor for correlating and outputting information relating to the received operating conditions and the acquired weather information.

According to this aspect of the present invention, the location information and the information relating to operating conditions are transmitted from the construction machine (rented machine) side, while at the receive station side weather information for the locality indicated by the received location information is acquired, and also information relating to the received operating conditions and the acquired weather information are correlated and output. As a result, it is possible to ascertain whether or not a construction machine has been operated without relying on notification from the user, and to charge an appropriate rental fee. By showing weather information for the locality where the construction machine is located, it is also possible to notify the user of a billing for operating a hydraulic excavator even in rainy weather, making it possible to avoid the occurrence of problems.

In a construction machine rental charge system of further another aspect of the present invention, a measurement device for measuring time spent using special functions, besides the normal functions, and a transmitter for transmitting information representing measured special function operating time, are provided in the construction machine. A receiving station has a receiver for receiving the transmitted information.

According to this aspect of the invention, since the amount of time spent using special functions other than normal functions is measured at the construction machine side and transmitted, and then this information is received at the receiving station side to set a special function usage charge, it is possible to accurately ascertain whether or not any special functions have been used without relying on notification from the user, and to set an appropriate rental fee.

### BRIEF DESCRIPTION OF THE DRAWINGS

Fig. 1 is a schematic drawing of a rental fee setting system of a first embodiment of the present invention.
Fig. 2 is a flowchart showing information collection processing for a hydraulic excavator.
Fig. 3 is a flowchart showing information communication processing for a hydraulic excavator.
Fig. 4 is a flowchart showing processing in a base station.
Fig. 5 is a flowchart showing processing in a rental company.
Fig. 6 is a drawing showing one example of a charge table created at a rental company.
Fig. 7 is a schematic drawing of a rental fee setting system of a second embodiment of the present invention.
Fig. 8 is a block diagram for information collection and input output processing for a hydraulic excavator.
Fig. 9 is a drawing showing content of daily report data.
Fig. 10 is a flowchart showing information collection processing for a hydraulic excavator.
Fig. 11 is a flowchart showing information communication processing for a hydraulic excavator.
Fig. 12 is a flowchart showing processing at a base station side.
Fig. 13 is a flowchart showing processing at a rental company side.
Fig. 14 is a drawing showing one example of a charge table created using the processing of Fig. 13.
Fig. 15 is a block diagram for information collection and input/output processing at a hydraulic excavator of a third embodiment of the present invention.
Fig. 16 is a block diagram showing a control system in a rental company.
Fig. 17 is a flowchart showing one example of information collection processing for a hydraulic excavator.
Fig. 18 is a flowchart showing one example of rental fee setting processing for a rental company.
Fig. 19 is a flowchart showing processing flow up to bill creation and bill transmittal based on a rental fee calculated and stored using the processing of Fig. 18.

### BEST MODE FOR CARRYING OUT THE INVENTION

### -First Embodiment-

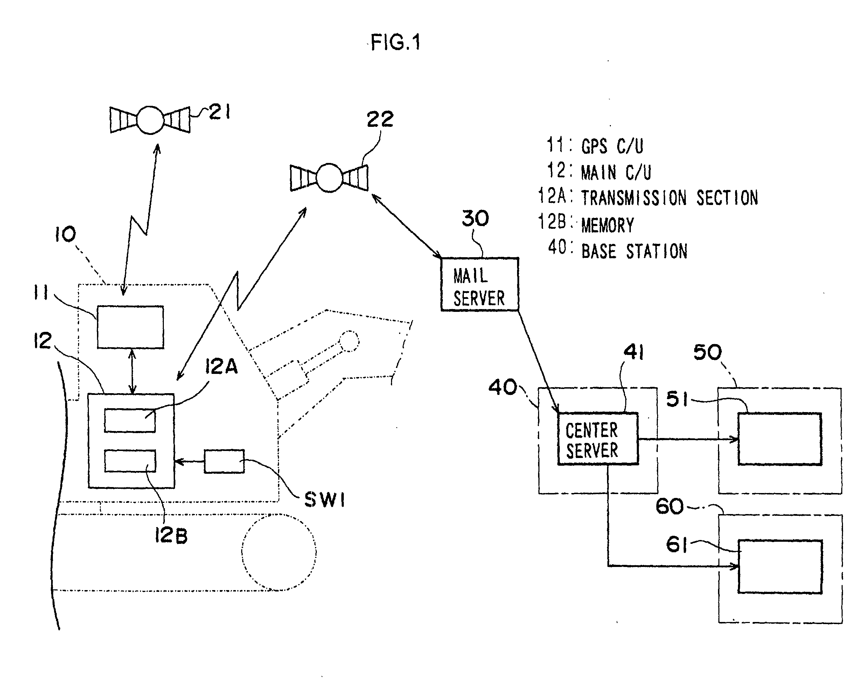

An embodiment of a rental fee setting system according to the present invention will now be described by applying it to a hydraulic excavator using Fig. 1 - Fig. 6.

This embodiment is for enabling a rental company to acquire weather information for a construction site and reflect this weather information in a rental fee.

Fig. 1 is a schematic diagram of the system of this embodiment. GPS control units 11 mounted separately in each hydraulic excavator 10 calculate location information for each hydraulic excavator 10 (in which they are mounted) by receiving radio signals from a plurality of GPS satellites 21. The calculated location information is input to a main control unit 12. The location information here is, for example, geographic information (i.e., information about latitude and longitude). The main control unit 12 measures operating time of its own machine and stores the information in a memory 12B, and also transmits information rélating to this operating time and the detected location information from a transmission section 12A at a predetermined time every day, as will be described later. Information to be transmitted is a variety of information such as fault information etc., as well as the above described operating time information and location information.

Information transmitted from a hydraulic excavator 10 is sent via a communications satellite 22 to a specified management server. With this embodiment, a mail server 30 is used as the management server. On the other hand, a center server 41 is located in a base station (for example, the main office or a branch office of a construction machine company) 40 for managing the hydraulic excavators 10, enabling reading of information sent from the mail server 30, and transmission of information by mail etc. to each terminal unit 51 or 61 of a user or the rental company, as required.

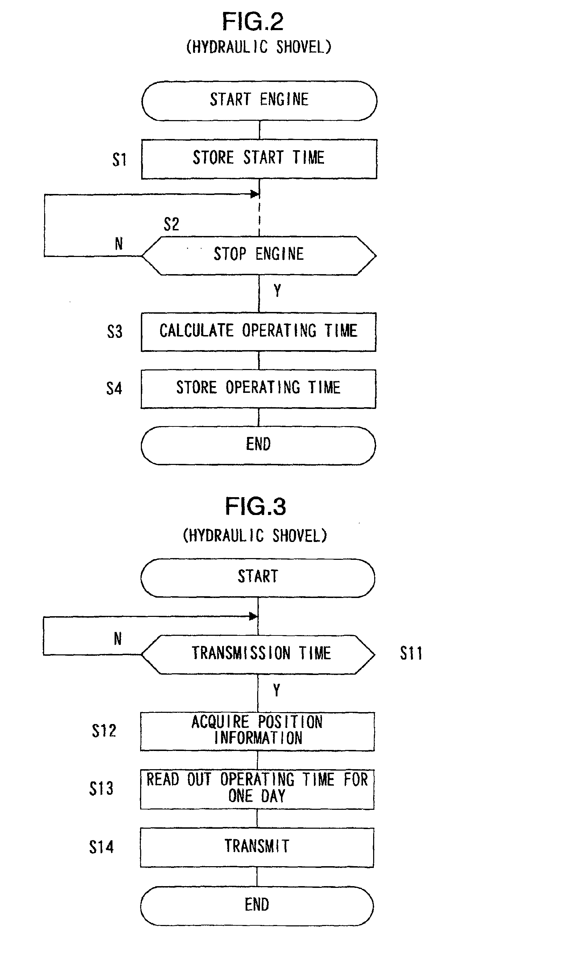

Next, a specific processing example will be described with reference to the flowcharts of Fig. 2 to Fig. 5.

Fig. 2 shows processing of the main control unit 12 of each hydraulic excavator 10. Once the engine is turned on, the time at that moment is stored in the memory 12B as the engine start time (step S1). After that, if it is determined that the engine has been shut off (step S2) the stored engine start time is subtracted from the time at that moment (engine stop time) to calculate an operating time for the hydraulic excavator 10 (step S3). The calculated operating time is then added to the operating time for that day currently stored, and this value is stored in the memory 12B (step S4). If there is no operating time for that day stored yet, the calculated operating time is stored as it is. The total operating time for one day is then finally stored in the memory 12B.

Fig. 3 shows communication processing for the main control unit 12. If it is determined that a predetermined transmission time has been reached, (step S11), location information at that point in time is obtained from the GPS control unit 11 (step S12). Operating time for one day is also read out from the memory 12B (step S13). That operating time and location information is then transmitted together with an ID number for identifying that hydraulic excavator 10 and the date (step S14). Here, transmission is carried out late at night when the hydraulic excavator is not operating, and total operating time for the previous day is transmitted every day.

Transmitted information from each hydraulic excavator 10 is sent through the communications satellite 22 to the mail server 30, as described above, and information is transferred from the mail server 30 to the base station 40.

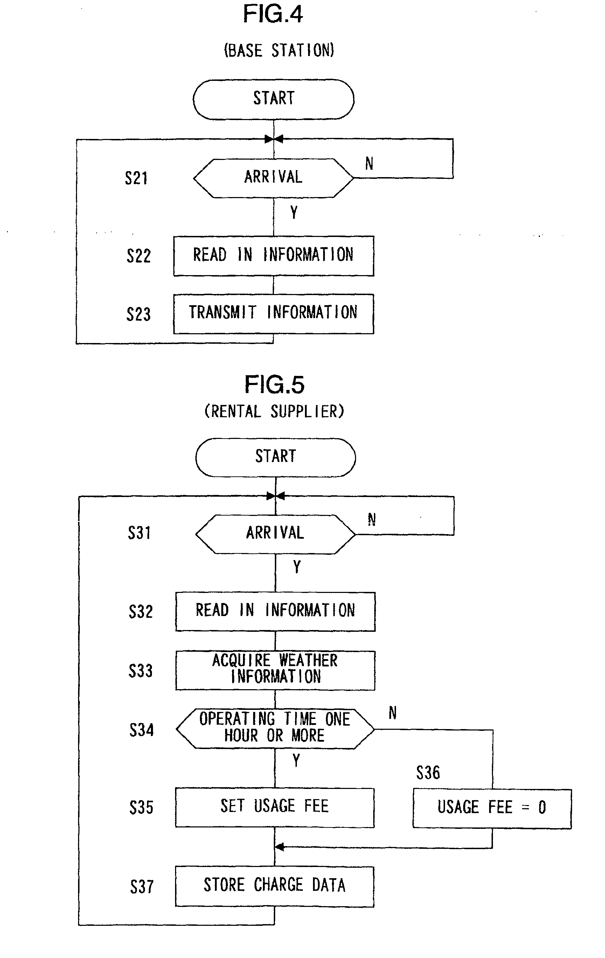

Fig. 4 shows processing for the center server 41 of the base station 40. It is determined whether or not information transmitted from the hydraulic excavator 10 has arrived (step S21), and if information has arrived that information is read from the mail server 30 (step S22). The read information is transmitted by email or the like to the rental company 60 (step S23).

Fig. 5 shows processing for a terminal unit 61 of the rental company 60. If it is determined that mail has arrived from the base station 40 (step S31), the content of that mail is read out and location information and operating time information for the hydraulic excavator 10 in question are ascertained (step S32). Weather information for the locality indicated by the read out location information is also acquired (step S33). This weather information may be acquired by, for example, preliminarily storing weather information for that day for each region from the internet and then selecting items that match the location information from the total weather information, or by connecting to the internet at the time when acquiring weather information. Whichever method is adopted, it is necessary to use weather information that is accurate over a comparatively narrow region (for example, within a radius of 20 km).

Next, it is determined whether or not the read out operating time for one day is, for example, one hour or more (step S34), and if it is one hour or more, a standard usage fee is set (step S35). If the usage time is less than one hour, the usage fee is set to 0 (step S36). Charge data correlating to the date, the region that the hydraulic excavator 10 exists in, weather for that region, whether or not the hydraulic excavator 10 was operated (whether or not operating time was an hour or more), and the usage fee, is then stored in a storage medium such as hard disc (step S37).

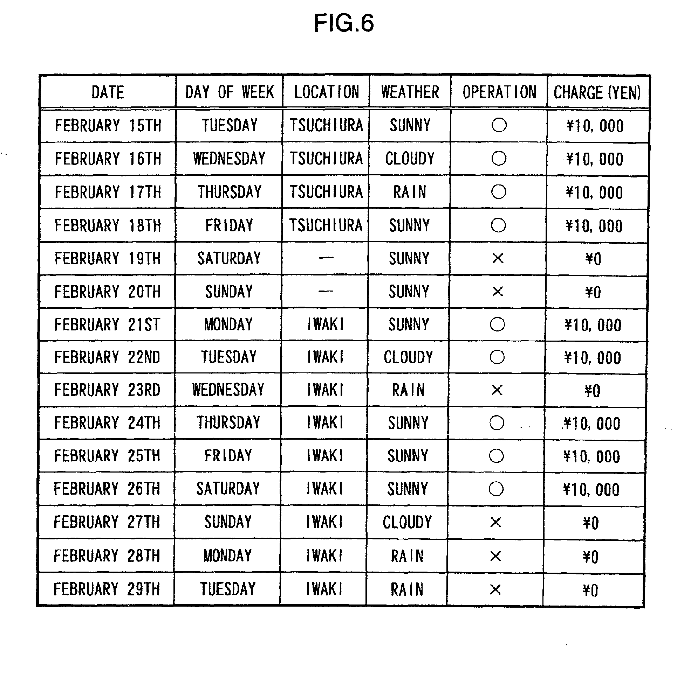

The above described processing of Fig. 5 is executed each time mail is received from the base station 40, thus the charge data of a plurality of hydraulic excavators 10 are stored for a number of days. The stored data is then read out as required, and a charge table such as that shown, for example, in Fig. 6 is created. The rental fee will be billed to the user referring to this charge table.

With this embodiment, it is therefore possible to bill an accurate amount without relying on notification from a user, because a rental fee is set based on operating time transmitted from each hydraulic excavator 10. Also, by displaying weather information for each day in a charge table, it is possible to clearly notify a user of charging for operation even if it is a rainy day, making it possible to avoid the occurrence of problems.

In the above description, a specified time for operation of a hydraulic excavator has been made one hour, but this time can be appropriately set according to the type of rental. As another way of using weather information, it is also possible to consider a system where even if there is operation of one hour or more on a rainy day, for example, it is determined that this accompanies traveling, and is automatically not charged. Further, in the above description weather information is acquired at the rental company side, but it is also possible to acquire the weather information at the base station side, transmit information correlating the operating time and the weather information to the rental company side, and create a charge table in the rental company.

### -Second Embodiment-

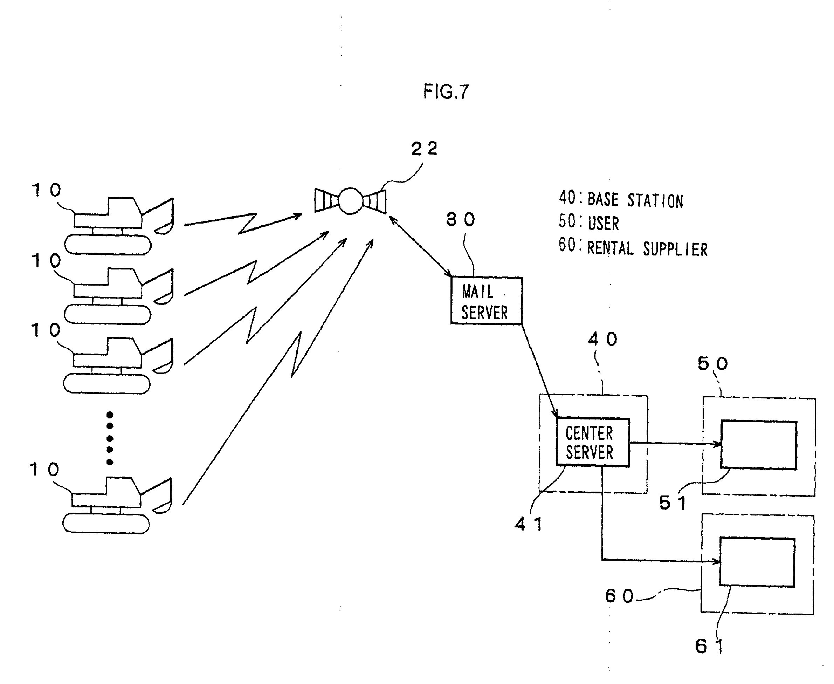

A second embodiment of the present invention will now be described using Fig. 7 - Fig. 14.

In this embodiment, it is automatically determined whether or not specialized functions such as the above described ML (moment limiter) or breaker have been used, and the results of determination are reflected in a rental fee.

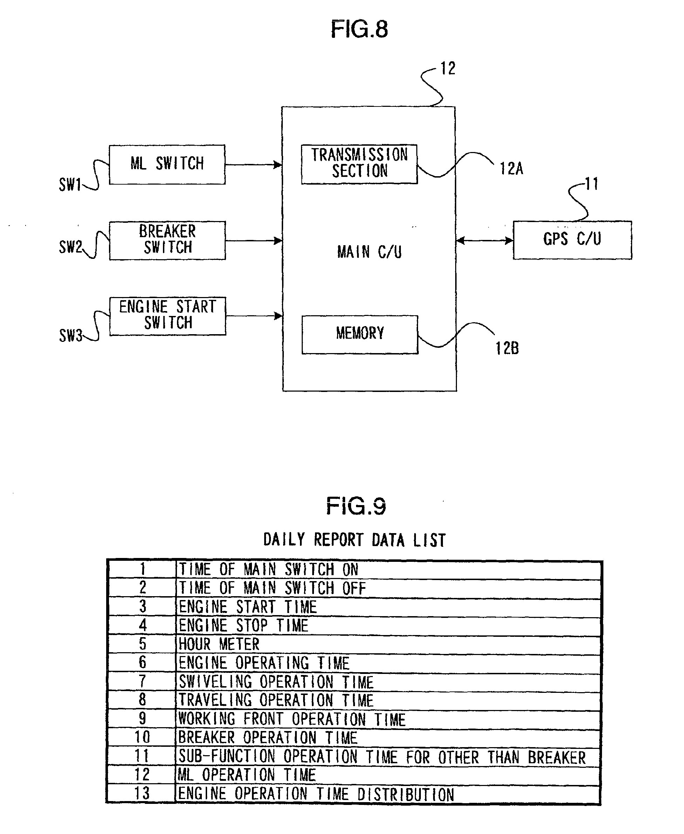

Fig. 7 and Fig. 8 are schematic diagrams of the system of this embodiment, and structural elements that are the same as those in Fig. 1 have the same reference numerals attached thereto.

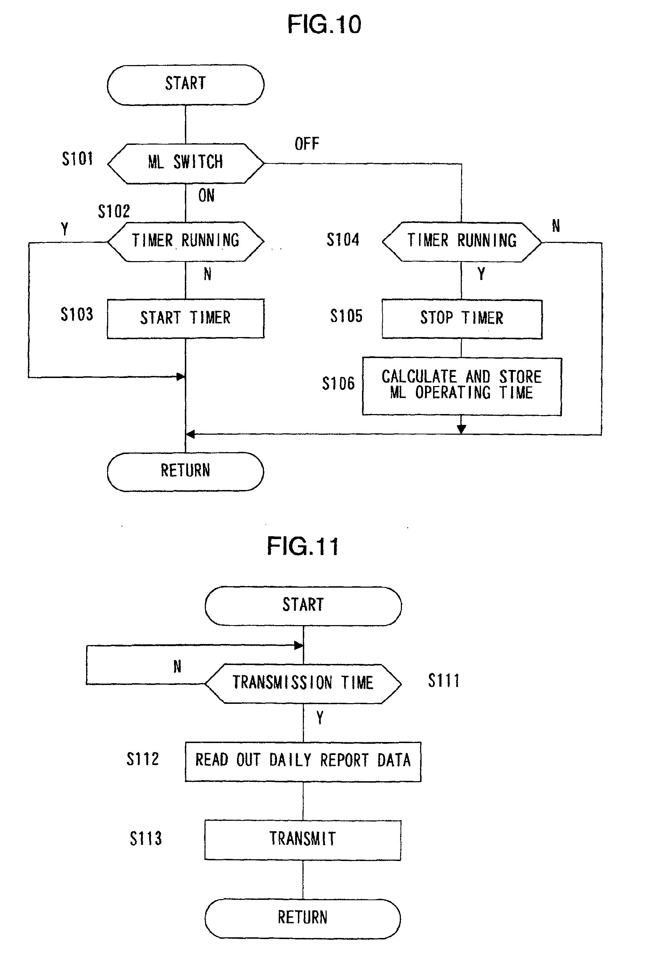

A plurality of hydraulic excavators 10 in the drawings are all owned by a rental company 60. Each hydraulic excavator 10 comprises a GPS control unit 11 and a main control unit 12, the same as the previous embodiment. The main control unit 12 collects information representing usage conditions of that hydraulic excavator 10 for one day. The collected information is used at the base station 40 side when creating a daily report, and may be as shown in Fig. 9.

Information shown in Fig. 9 (hereafter called daily report data) is measured based on output from various switches and sensors provided in the hydraulic excavator 10. Included in this information an engine operating time is obtained based on ON and OFF operations of an engine start switch SW3. Also, an ML operation time and a breaker operating time are obtained based on operation of an ML switch SW1 and a breaker switch SW2 respectively. The ML switch SW1 is turned on when the ML is used, and turned off when the ML is not in use. The main control unit 12 causes the maximum discharge amount of a main hydraulic pump to be reduced lower than at the time of normal operation when the ML switch is turned ON. Also, the breaker switch SW2 is provided in a breaker actuating hydraulic circuit (a pilot circuit) and is a pressure switch that turns on when the breaker is in use.

The daily report data are transmitted from the transmission section 12A at a predetermined time every day. The transmitted data is sent to the base station 40 through the communications satellite 22 and the mail server 30, as described above. Transmission information is various information besides the daily report data, such as location information and fault information of the hydraulic excavator.

Next, a specific example of processing of this embodiment will be described with reference to the flowcharts of Fig. 10 - Fig. 13.

The processing of Fig. 10 is for measuring ML operating time and is executed periodically in the main control unit 12 of each hydraulic excavator 10 while the engine is turned on. If it is determined that the ML switch SW1 is on (step S101) and that a timer is not operating (step S102), the timer built in to the main control unit 12 is started (step S103). On the other hand, if it is determined that ML switch SW1 is off (Step S101), and that the timer is running (step S104), the timer is stopped (step S105). The time clocked by this timer, namely the time from when the ML switch SW1 is turned on until it is turned off, is then obtained, that time is added to the ML operating time for that day currently stored and stored in the memory 12B (step S106). Therefore, the ML operating time for one day is finally stored in the memory 12B.

A description has only been given above for a method of measuring ML operating time, but breaker operating time can also be measured in a similar way using the breaker switch SW2 and stored in the memory 12B. It is also possible to measure the other daily report data shown in Fig. 3 using processing that has not been shown in the drawings and to store these data in the memory 12B in a similar manner.

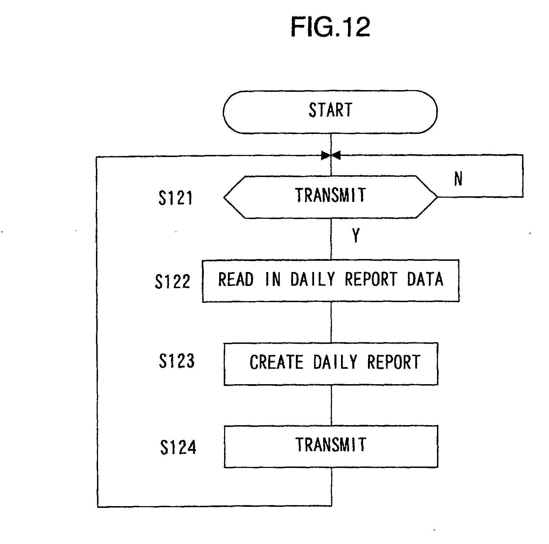

Fig. 11 shows communication processing carried out in the main control unit 12 of the hydraulic excavator 10. If it has been determined that a predetermined transmission time has arrived (step S111), daily report data is read from the memory 12B (step S112) and that daily report data is transmitted together with an ID No. for identifying that hydraulic excavator 10 (step S113). In this example, transmission is carried out late at night when the volume of other communications is relatively small and daily report data for the previous day are transmitted every day.

Transmitted information from each hydraulic excavator 10 is sent via a communications satellite 22 to the mail server 30, as described above, and transferred to the base station 40.

Fig. 12 shows processing in a center server 41 of the base station 40. It is determined whether or not information has arrived from a hydraulic excavator 10 (step S121), and if information has arrived, that information is read in (step S122). A daily report is then created based on the read-in information (here it is daily report data) (step S123), and that daily report is transmitted to a user 50 using email or the like (step S124). In the case of a hydraulic excavator 10 owned by a rental company 60, the same information is also transmitted to the rental company 60.

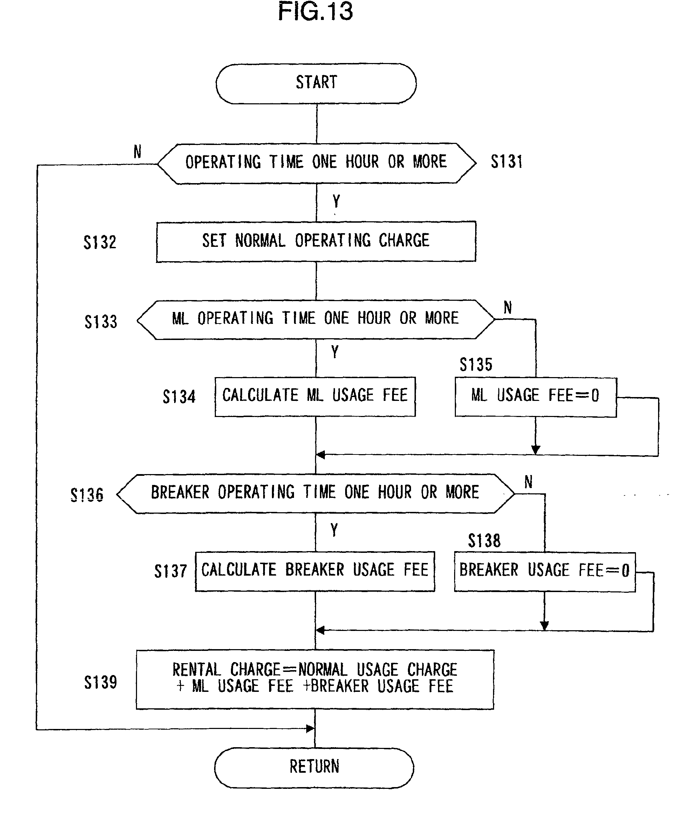

Fig. 13 is a flowchart showing one example of processing in a terminal unit 61 of the rental company 60, and this is processing for a single hydraulic excavator 10. Information (daily report) from the base station 40 has already been received, and also, the operating time, ML operating time and breaker operating time of the excavator for one day have been obtained.

If it is determined, for example, that operating time of the excavator for that day is less than one hour (step S131), processing returns without performing charge setting. Specifically, in the event that operating time is less than one hour, a rental fee is not billed. On the other hand, if operating time is one hour or more, a normal usage charge is calculated (step S132). If it is determined that ML operating time is one hour or more (step S133), a standard ML usage fee is calculated (S134), while if the ML operating time is less than one hour, the ML usage fee is set to 0 (step S135). Similarly, if it is determined that breaker operating time is one hour or more (step S136), a standard breaker usage fee is calculated (S137), while if the breaker operating time is less than one hour, the breaker usage fee is set to 0 (step S138). The ML usage fee and the breaker usage fee are then added to the normal usage fee to give a charge that is the rental fee for that day (step S139).

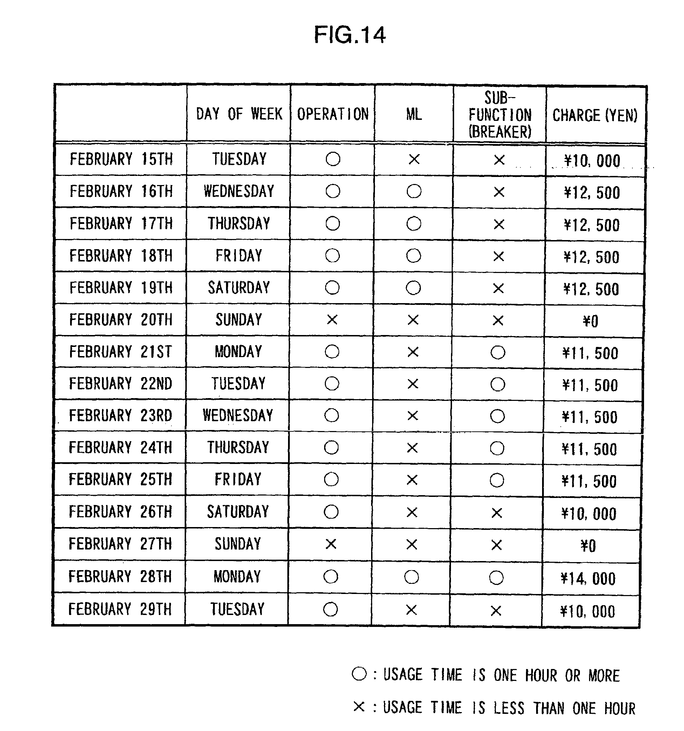

Fig. 14 shows one example of the result of carrying out the above described processing over a period of several days.

With this embodiment, usage time of specialized functions other than normal functions, called ML operating time and breaker operating time, are measured at the hydraulic excavator side and transmitted. This transmission information passes through the base station 40 and is received at the rental company 60, where an ML usage fee and a breaker usage fee are set based on received information at the rental company side. With this type of system, it is possible to accurately ascertain whether or not the ML or breaker have been used without relying on notification from a user, making it possible to charge an appropriate rental fee.

It is also possible for the above described normal charge for one day to be a predetermined amount, or to correspond to the usage time as disclosed in, for example, Japanese Laid-open Patent Publication No. H8-273015. Although a criterion for determining operation of the hydraulic excavator has been set to one hour, it is also possible to appropriately set this time depending on the type of rental. The specialized functions are not limited to the ML and breaker, and may be other functions that require a separate usage fee to be added to the normal charge. In the above description, description has been given for a situation where daily report data is transmitted to a base station, but it is also possible to transmit directly to the rental company 60.

### -Third Embodiment-

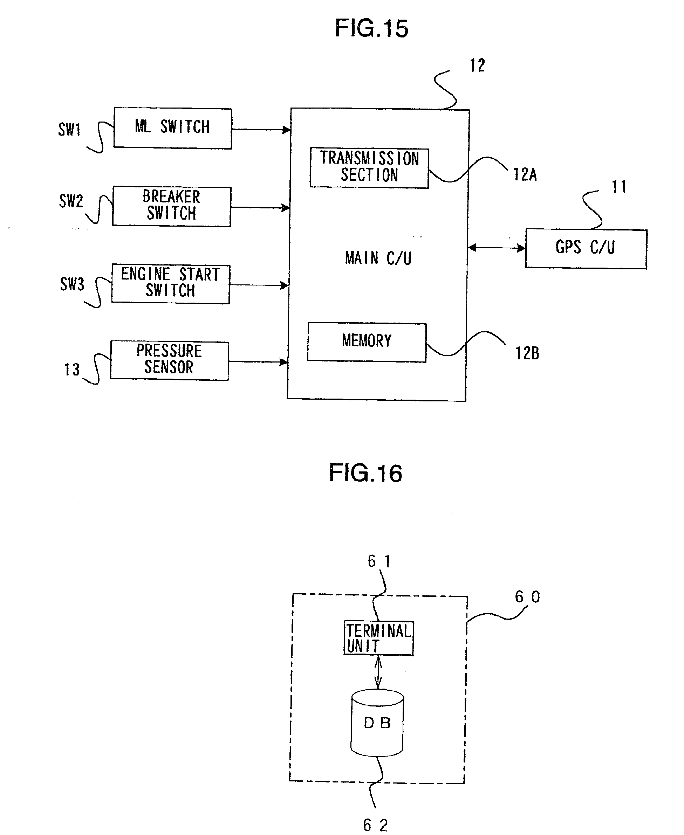

A third embodiment of the present invention will now be described using Fig. 15 - Fig. 19.

This embodiment is for setting rental fees taking various usage conditions and usage environments of a hydraulic excavator 10 into consideration.

When an operating load or traveling load is heavy, the burden placed on the hydraulic excavator 10 is large compared to when the load is light, so that the life span of various parts is shortened. Therefore, it is desirable to charge a higher rental fee when the operating load or traveling load is heavier. The hydraulic excavator 10 of this embodiment makes it possible to acquire information relating to operating load and traveling load by detecting discharge pressure of a hydraulic pump etc. used in operation and traveling using a pressure sensor 13 (see Fig. 15). This information can be, for example, the time over which detected pressure exceeds a specified value, or an average pressure value.

Work carried out by the hydraulic excavator 10 is classified into "working", "swiveling" and "traveling". As working time is prolonged, damage to components on the working front becomes more severe, and the longer swiveling time becomes the greater the damage to components constituting a swiveling wheel. Similarly, as traveling time increases, the more damage to undercarriage components increases. This means that there is a desire to set the rental fee for the hydraulic excavator 10 taking into account the working time, traveling time and swiveling time. In the hydraulic excavator 10 of this embodiment the operating time, swiveling time and traveling time can be separately measured. These times may be actuator operating times governing respective jobs, or times over which pressure of respective hydraulic circuits is greater than a predefined value. It may also be the time over which respective operating members are being operated.

With respect to a working location, for example, there will a lot more corrosion of the hydraulic excavator 10 when working on the coast compared to working at a normal location, and since working inside a tunnel involves a lot of dust, damage to the hydraulic excavator 10 will be more severe. There is therefore also a desire to set the rental fee of the hydraulic excavator 10 taking into account the working location. The working location can be identified from location information detected using the above described GPS control unit 11.

Previously, examples were described assuming that work was not carried out when it was raining, but the work is sometimes carried out even though it is raining, such as, when the work is behind schedule. Since working in rainy weather promotes corrosion, it is more likely that the hydraulic excavator 10 will be damaged compared to working in fine weather. There is thus a need for the rental fee to take in to account weather information. A rental fee in the case of using specialized functions such as a ML or a breaker will be set as described in the second embodiment.

As shown in Fig. 16, a loan management database 62 is provided in the rental company 60 owning the hydraulic excavators 10. This database 62 contains data such as a loaned machine ID No., machine type, specifications (including whether or not there is a ML or breaker is provided), and loan period organized into each user to which a machine has been loaned. A terminal unit 61, sets a rental fee as will be described later based on information that has been transmitted from the hydraulic excavator 10 and information stored in the database 62.

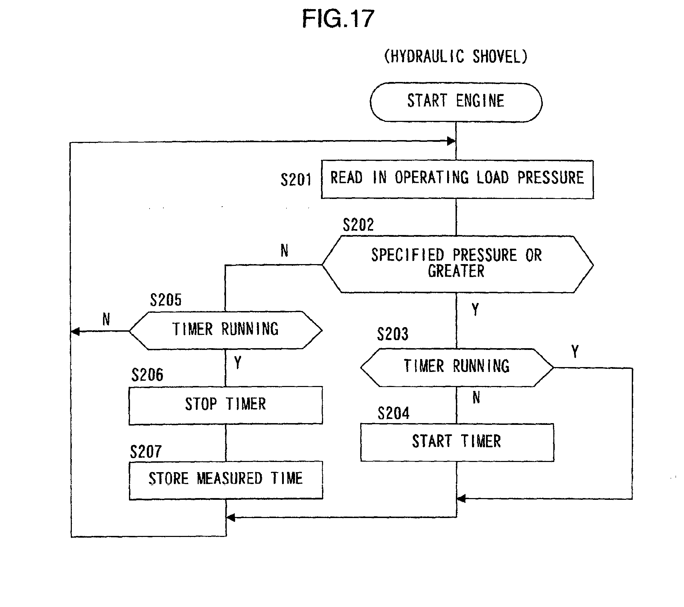

A specific example of control for this embodiment will now be described with reference to the flow charts of Fig. 17 - Fig. 19.

Fig. 17 shows processing in the main control unit 12 of the hydraulic excavator 10. If the engine is started, an operating load which is detection output from the pressure sensor 13, is read in (step S201) and it is determined whether or not this pressure is greater than or equal to a predetermined value (step S202). If the pressure is greater than or equal to the specified value, it is determined whether or not a timer is running (step S203), and if the timer is not running it is started in step S204 and processing returns to the start. If the pressure is less than the predetermined value, it is determined whether or not the timer is running (step S205). If the timer is running, it is stopped (step S206), and an elapsed time from starting to stopping of the timer is added to a time already stored, and stored newly in the memory 12B (step S207). Therefore, the time over which the working load is kept at or higher than the predefined value is stored in the memory 12B.

As shown in FIG. 17, an example of measuring the time over which the working load is at or greater than a predefined working load has been described, the traveling load is also measured using a similar procedure. In fact, the working time, swiveling time and traveling time are all measured in a similar manner. A procedure for obtaining ML and breaker usage time and location information for the hydraulic excavator 10 has been described in the previous embodiment. The obtained time information is stored in the memory 12B correlated to an ID No. for identifying the hydraulic excavator 10.

Information stored in the memory 12B is read out when a predetermined transmission time is reached, as described above, and transmitted from the transmission section 12A together with location information and an ID No. The transmitted information is transferred to the base station 40 through a communications satellite 22 and a mail server 30, and is transmitted further to the rental company 60 using email, for example.

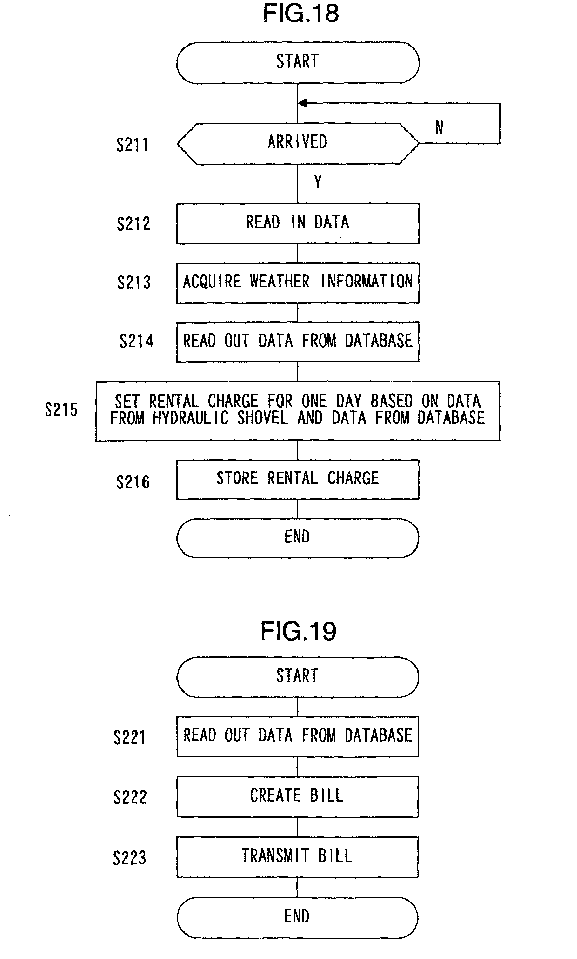

Fig. 18 shows one example of processing for the terminal unit 61 of the rental company 60. This processing is to set a rental charge for each day.

If it is determined that mail has arrived from the base station 40 (step S211), the content of that mail is read out and information relating to the hydraulic excavator 10 in question is ascertained (step S212). Also, similarly to the first embodiment, weather information of a region indicated by the read in location information is acquired (step S213). Information such as type and specifications of the hydraulic excavator 10 in question are also read out from the loan management database 62 (step S214). A rental fee for one day is then set based on information from the hydraulic excavator 10 and information from the database 62 (step S215).

Various methods of setting a rental fee can be considered. As one example, a basic charge per day is set in advance for each type of machine, and an amount corresponding to usage conditions and environmental conditions is added to the basic charge corresponding to the type of the hydraulic excavator 10 in question (determined using information from the database 62). Specific examples are shown below.
(1) A predefined charge A is added if the time over which working load or traveling load is a predetermined value or greater exceeds a predetermined time. Alternatively, a predefined charge A is added if an average value of working load or traveling load exceeds a predetermined value.
(2) Predefined charges B, C or D are added if working time, swiveling time or traveling time exceed respective predetermined times.
(3) A predefined charge E is added in the case of working at a location that subjects the hydraulic excavator to severe environmental conditions, such as on the coast or in a tunnel. The working location is determined from location information.
(4) A predefined charge F is added if working in rainy weather or snowy conditions. Whether or not the weather is rainy (or snowy) is determined from weather information.
(5) A specified charge G is added in the case of using specialized functions such as a ML or breaker. The charge to be added may be varied according to usage time

A final rental fee for one day is set through processing for these various items. The set rental fee is stored in the database 62 correlated to the renting party (step S216).

After that, when a rental fee is charged, processing such as that shown in Fig. 19, is executed. Specifically, all rental charge data for rental days stored in the database 62 are read out (step S221), a billed amount is calculated by adding these items of data, and a bill is created (step S222). The created bill is transmitted to a user (renting party) 50 using email, for example (step S223).

The above described processing of Fig. 18 and Fig. 19 is carried out for each hydraulic excavator 10 of the rental company 60.

With this embodiment, since usage conditions of the hydraulic excavator 10 (working load, traveling load, working time, swiveling time, traveling time, and whether or not an ML or breaker is used) and environmental conditions (working location, weather) are obtained and a rental fee is set based on this information, it is possible to set an appropriate rental fee for all usage conditions and environmental conditions.

A rental fee may be calculated by substituting respective time information into specified arithmetic expressions without determining a basic charge. By doing this, it is possible to set a more detailed charge.

An example has been given above of setting rental fees in units of one day and adding them together later, but it is also possible to set a weekly or monthly rental fee by carrying out rental fee setting processing once a week or once a month. For example, the fee may be calculated by adding a specified charge to a basic charge in the event that total working time per month exceeds a predetermined time. It is expected that the above described rental charge setting or bill creation could be made more efficient by using dedicated software. For example, it is possible to carry out the processing shown in Fig. 18 automatically without the intervention of an operator. Alternatively, rental fee setting and bill creation can be carried out through calculation by an operator.

In the description above, information from a hydraulic excavator 10 is sent to the rental company temporarily through a base station 40 such as a construction machine maker, but it is also possible to have a system that sends information from the hydraulic excavator 10 directly to the rental company 60. In other words, the rental company 60 may be a base station.

### INDUSTRIAL APPLICABILITY

Description has been given above for a rental fee setting system for hydraulic excavators, but the present invention can also be applied to a rental fee setting system for construction machines other than hydraulic excavators (for example a crane etc.).

## Claims

1. A construction machine rental fee setting system, comprising:
a receiver, provided at a location remote from a construction machine, that receives information relating to usage conditions and/or usage environment of the construction machine transmitted from the construction machine, and
a rental fee setting device that sets a rental fee for the construction machine based on the information received at the receiver.

2. A construction machine rental fee setting system, comprising:
an information acquisition unit, provided in a construction machine, that acquires information relating to usage conditions and/or usage environment of the construction machine;
a transmitter that transmits the information that has been acquired;
a receiver, provided at a location remote from the construction machine, that receives the information relating to the usage conditions and/or the usage environment of the construction machine transmitted from the transmitter, and
a rental fee setting device that sets a rental fee for the construction machine based on the information received at the receiver.

3. A construction machine rental fee setting system according to claim 1 or claim 2, wherein:
the information relating to the usage conditions of the construction machine includes at least one of information relating to a workload, information relating to a traveling load, information relating to a working time, information relating to a swiveling time, and information relating to a traveling time of the construction machine.

4. A construction machine rental fee setting system according to claim 1 or claim 2, wherein:
the information relating to the usage conditions of the construction machine is information relating to whether a specialized function other than normal functions is used.

5. A construction machine rental fee setting system according to claim 1 or claim 2, wherein:
the information relating to the environmental conditions of the construction machine includes any of information relating to a working location of the construction machine and information relating to weather.

6. A construction machine rental fee setting system according to claim 1 or claim 2, wherein:
the receiver and the rental fee setting device are provided in a rental company, and
the receiver receives the information from the construction machine via a relay station.

7. A construction machine rental fee setting system according to claim 6, wherein:
the relay station transmits the information from the construction machine to the rental company using an electronic mail.

8. A construction machine rental fee setting system according to claim 1 or claim 2, wherein:
the rental fee setting device sets the rental fee based on the information received by the receiver and loan data stored in a specified database.

9. A rental fee setting system that receives information transmitted from a construction machine having been rented, using a receiving station, wherein:
the construction machine comprises a detector that detects a location of the construction machine, a measurement unit that measures operating conditions of the construction machine, and a transmitter that transmits the information relating to the location and the operating conditions, and
the receiving station comprises a receiver that receives the information transmitted from the construction machine, a weather information acquisition unit that acquires weather information for a region indicated by received location information, and a data processor that correlates and outputs the information relating to the operating conditions that has been received and the weather information that has been acquired.

10. A rental fee setting system according to claim 9, further comprising:
a fee setting device that sets a rental fee based on the information relating to the operating conditions that has been received, and wherein;
the data processor correlates and outputs the information relating to the operating conditions, the weather information and information relating to the rental fee .

11. A rental fee setting system that receives information transmitted from a construction machine having been rented, using a receiving station wherein:
the construction machine comprises a measurement unit that measures usage time of a specialized function other than normal functions, and transmitter that transmits information representing a specialized function usage time having been measured, and
the receiving station comprises a receiver that receives transmitted information.

12. A rental fee setting system according to claim 11, wherein:
the receiving station further comprises a fee calculating unit that calculates a usage charge for the specialized function based on the information about the specialized function usage time having been received.

13. A rental fee setting system according to claim 11, wherein:
a fee calculating system outputs fee data calculated by adding a usage charge for the specialized function to a normal fee.

14. A rental fee setting system that receives information transmitted from a construction machine having been rented, using a receiving station, wherein:
the construction machine comprises a measurement unit that measures a normal operating time and a usage time for a specialized function other than normal functions respectively, and a transmitter that transmits information representing measured operating time and specialized function usage time, and
the receiving station comprises a receiver that receives transmitted information, and a fee calculating unit that calculates a rental fee for the construction machine based on received information.
